# EUROPÄISCHE PATENTSCHRIFT

(11) **EP 1 526 041 B1**
(45) Veröffentlichungstag und Bekanntmachung des Hinweises auf die Patenterteilung: **07.12.2016**
(21) Anmeldenummer: 04022693.8
(22) Anmeldetag: 23.09.2004
(51) Int. Cl.: B60R 16/02

(54) **Steckverbinder für elektrische Leitungen in einem Fahrzeug**
Connector for electrical conductors in a vehicle
Connecteur pour conducteurs électriques dans un véhicule

(30) Priorität: 21.10.2003 DE 10348915
(43) Veröffentlichungstag der Anmeldung: 27.04.2005
(73) Patentinhaber: Bayerische Motoren Werke Aktiengesellschaft, 80809 München (DE)
(72) Erfinder: Albiez, Robert, 85084 Reichertshofen (DE); Eder, Georg, 85368 Moosburg (DE); Nirschl, Michael, 84144 Geisenhausen (DE)

(56) Entgegenhaltungen:
- US-A1- 2002 064 031

## Beschreibung

Die Erfindung betrifft eine Steckverbindung für elektrische Leitungen in einem Fahrzeug, bei der ein fahrzeugseitiger Hauptkabelbaum und ein fahrzeugtürseitiger Türkabelbaum über als Gegenstücke ausgebildete Steckverbinder an einer Trennstelle miteinander elektrisch verbindbar sind, und bei der die Trennstelle zwischen dem Hauptkabelbaum und dem Türkabelbaum in einem Trockenbereich der Fahrzeugtür angeordnet ist.

Bei der Vormontage der Komponenten in einer Fahrzeugtür ist eine Trennstelle zwischen einem mit einen Bordnetz des Fahrzeuges verbundenen Hauptkabelbaum über den eine zentrale elektrische Versorgung und Ansteuerung von Verbrauchern in der Fahrzeugtür zur Verfügung gestellt wird und einem Türkabelbaum, an den die einzelnen Verbraucher in der Fahrzeugtür anschließbar sind, notwendig. Oft ist auch ein Türsteuergerät vorgesehen, das an den Türkabelbaum angeschlossen ist. Die Trennstelle kann in einem Nassbereich an der Türperipherie, beispielsweise an einem türscharnierseitigen Türinnenblech oder in einem Trockenbereich innerhalb der Tür vorgesehen sein. Meist werden aus Kostengründen im Nassbereich nur 1:1 Rundleiter - Verbindungen eingesetzt oder Rundleiter werden im Trockenbereich an ein Türsteuergerät angeschlossen. Zunehmend werden bei der Türverkabelung aus bauraum- und schaltungstechnischen Gründen aber auch Flachleiter eingesetzt, so dass die Steckverbindung zwischen Hauptkabelbaum und Türkabelbaum auch für einen Übergang von Rundleitern auf Flachleiter geeignet sein muss.

Aus der DE 100 45 875 A1 ist eine Leitungsdurchführung an einer Fahrzeugtür bekannt, bei der ein Leitungsstrang, bzw. ein Hauptkabelbaum, über eine elastische Dichtung in einen Trockenraum einer Fahrzeugtür geführt wird. Die Dichtung ist über ein Halterungsblech in einer Senke am Türinnenblech gehaltert und dichtet mittels Dichtlippen gegenüber der Senke und bei geschlossener Tür über eine zusätzliche Dichtwulst gegenüber einer Türdichtung ab. Eine elastisch aufweitbare Durchgangsöffnung in der Dichtung ermöglicht das Hindurchführen des Leitungsstrangs samt Steckergehäuse. Durch die elastische Vorspannung der Durchgangsöffnung liegt die Dichtung radial an dem hindurchgeführten Leitungsstrang abdichtend an. Die Dichtung ist einstückig mit einem Faltenbalg verbunden über den der Leitungsstrang vom Fahrzeug her kommend zur Fahrzeugtür geführt wird und geschützt ist.

Nachteilig bei der bekannten Leitungsdurchführung wirkt sich aus, dass die elastische Dichtung einerseits einen geringeren Durchmesser als der Hauptkabelbaum aufweisen soll, um ein radiale Vorspannung gegenüber diesem zu erzeugen, andererseits ein vormontiertes Steckergehäuse durch die Durchgangsöffnung durchgeführt werden soll. Dies kann Dichtheitsprobleme verursachen oder Kompromisse bei der Steckerauslegung notwendig machen. Weiterhin wird ein relativ großer Verlegraum beansprucht, um den Kabelbaum samt Steckergehäuse in den Trockenraum zu führen, insbesondere wenn das Steckergehäuse für den Übergang von Steckverbindern für Rundleiter auf Steckverbinder für Flachleiter entsprechend groß dimensioniert sein muss.

Aus der DE 196 53 733 C2 ist ein Steckverbinder zwischen einem Nassraum und einem Trockenraum innerhalb einer Fahrzeugtür bekannt. In dem Steckverbinder sind verschiedene einzelne Kabelverbindungen in einem Bauteil zusammengefasst. Der Steckverbinder selbst kann in einem Bauteilhalter integriert sein, das eine Wandung zwischen dem Trockenbereich und dem Nassbereich innerhalb der Fahrzeugtür durchgreift.

Das Dokument US 2002/0064031 A1 offenbart eine Standardverkabelungseinheit für eine Fahrzeugtür mit einem Verbindungsmechanismus. Mittels der Verkabelungseinheit wird ein Fensterhebermechanismus der Fahrzeugtür angesteuert.

Nachteilig wirkt sich aus, dass der Steckverbinder als Trennung zwischen Nass-und Trockenraum wasserdicht ausgeführt sein muss. Eine wasserdichte Steckverbindung erfordert einen hohen Kostenaufwand, insbesondere, wenn die Steckverbindung für den Übergang von Rundleitern auf Flachleiter ausgelegt sein muss. Weiterhin sind Nachrüstungen an dem Steckverbinder nicht oder nur mit großem Aufwand möglich.

Aufgabe der vorliegenden Erfindung ist es daher, die bekannten Steckverbindungen zwischen einem Hauptkabelbaum und einem Türkabelbaum so zu verbessern, das sie in Konstruktion und Einbauaufwand kostengünstiger sind und dass sie flexibler verwendbar sind.

Die Aufgabe wird erfindungsgemäß in Verbindung mit dem Oberbegriff des Anspruchs 1 dadurch gelöst, dass der zur Fahrzeugtür hin zeigende Abgang des Hauptkabelbaums über eine an der Fahrzeugtür angeordnete Verlegehilfe zu der Trennstelle in den Trockenraum der Fahrzeugtür führbar ist.

Dadurch, dass der Steckverbinder des Hauptkabelbaums modular aufgebaut ist, wird die Steckverbindung sehr flexibel in ihrer Anwendung und bei der Montage. Das Zusammenfügen der einzelnen Steckermodule kann entweder in der Vormontage beim Konfektionär oder erst direkt beim Einbau der Fahrzeugtür am Fahrzeug erfolgen. Letzteres hat den Vorteil, dass der benötigte Bauraum für den Verlegweg wesentlich reduziert werden kann. Durch die Modulbauweise kann der Hauptkabelbaum mit den einzelnen Steckermodulen leicht durch eine Durchgangsöffnung geringen Durchmessers eines einfachen abdichtenden Trennelements zwischen Nassraum und Trockenraum zur Trennstelle im Trockenraum der Fahrzeugtür hindurchgeführt werden. Konstruktiv aufwendige und kostenintensive wasserdichte Steckverbindungen entfallen. Grundsätzlich ist die erfindungsgemäße Steckverbindung auch für Heckklappen, Kofferraumdeckel, Fronthauben u.a. andere periphere Fahrzeugteile geeignet.

Gemäß einer bevorzugten Ausführungsform der Erfindung ist der Steckverbinder des Türkabelbaums in der modularen Bauweise aus Steckermodulen ausgebildet.

Dadurch dass beide Steckverbinder, d.h. auf der Hauptkabelbaumseite und auf der Türkabelbaumseite, in der modularen Bauweise ausgebildet sind, wird die Steckverbindung noch flexibler in ihren Gestaltungs- - und Funktionsmöglichkeiten. Die einzelnen Steckermodule, insbesondere auf der Türkabelbaumseite, können für Rundleiter und Flachleiter individuell angepasst werden, so dass sowohl Rund- als auch Flachleiter einfacher kontaktiert werden können. Grundsätzlich können auch auf der Hauptkabelbaumseite Flachleiter und/oder Rundleiter zur Verwendung kommen.

Nach einer weiteren bevorzugten Ausführungsform der Erfindung sind die Steckermodule über an den Steckermodulkörpern angeordnete, formschlüssig ineinandergreifende Verbindungsmittel zusammenfügbar.

Dadurch, dass an den Steckermodulkörpern formschlüssig ineinandergreifende Verbindungsmittel angeordnet sind, wird ein einfaches Verbindungssystem für die Steckermodule zur Verfügung gestellt, aus dem die Steckverbinder je nach Bedarf aufgebaut werden können. Ebenso kann ein so aufgebauter Steckverbinder auch leicht wieder auseinandergenommen werden. Das Verbindungssystem kann beispielsweise bei quaderförmigen Steckermodulkörpern dadurch realisiert werden, dass an einer Längsseite eines ersten Modulkörpers eine Ausnehmung mit einem übergreifenden Rand vorgesehen ist, der mit einem Vorsprung an einer benachbarbaren Längsseite eines mit dem ersten Modulkörper zu verbindenden zweiten Modulkörpers in Wirkverbindung eine einfache Verriegelung bildet. Auf diese Weise können beliebig viele Steckermodule aneinandergefügt werden. Im Servicefall können defekte Steckermodule leicht und kostengünstig ersetzt werden. Ebenso sind Nachrüstungen einzelner Steckermodule und Erweiterungen der Steckverbindung möglich.

Gemäß einer weiteren bevorzugten Ausführungsform der Erfindung ist der Steckverbinder des Türkabelbaums auf der Trockenseite eines den Trockenbereich der Fahrzeugtür begrenzenden Türbauteils fixiert. An einem oder mehreren Steckermodulen des Türkabelbaums kann eine Befestigungshilfe zur Fixierung des Steckverbinders des Türkabelbaums angeordnet sein.

Durch die Fixierung des Steckverbinders des Türkabelbaums an der Trennstelle auf der Trockenseite eines den Trockenbereich der Fahrzeugtür begrenzenden Türbauteils wird die Herstellung der Steckverbindung bei der Montage der Tür am Fahrzeug erheblich erleichtert. Der zusammengebaute Steckverbinder oder die einzelnen Steckermodule des Hauptkabelbaums können leicht auf den fest vormontierten Steckverbinder des Türkabelbaums aufgesteckt werden. Besonders vorteilhaft ist auch die Anordnung von Befestigungshilfen an den Modulkörpern des Türkabelbaums. Dies können beispielsweise seitliche Ansätze mit Bohrungen zur Aufnahme einer Verschraubung sein. Grundsätzlich ist es aber auch möglich, beispielsweise mit einer Klemmvorrichtung an dem Türbauteil, den türkabelbaumseitigen Steckverbinder ohne speziell an die Modulkörper angeordnete Befestigungselemente zu haltern.

Nach einer weiteren bevorzugten Ausführungsform der Erfindung kann die Verlegehilfe als ein flexibles Kunststoffrohr ausgebildet sein. Die Verlegehilfe kann zwischen einer Öffnung in einem stirnseitigen Bereich eines Türinnenbleches oder im Bereich einer Türinnenverkleidung und einem Durchbruch des den Trockenbereich der Fahrzeugtür begrenzenden Türbauteils angeordnet sein. Der Steckverbinder des Türkabelbaums kann auf der Trockenseite des den Trockenbereich der Fahrzeugtür begrenzenden Bauteils benachbart zu dem Durchbruch fixiert sein. Das den Trockenbereich der Fahrzeugtür begrenzende Türbauteil kann als ein formstabiles Bauteil, beispielsweise eine Schallisolierung der Fahrzeugtür, ausgebildet sein.

Durch die Verlegehilfe wird die Montage der Steckverbindung weiter vereinfacht. Beim Einbau der kompletten Tür in der Montage wird der Abgang des Hauptkabelbaums durch eine Öffnung im Türinnenblech oder in der Türinnenverkleidung gefädelt. Als Verlegehilfe kann ein einfaches Kunststoffrohr dienen. Besonders kostengünstig ist es, das Kunststoffrohr bzw. den Kunststoffkanal in einen Durchbruch einer meist ohnehin vorhandenen Schallisolierung zu führen und dort die Trennstelle zu positionieren. Der Steckverbinder des Türkabelbaums kann einfach auf der Trockenseite der Schallisolierung befestigt, beispielsweise verschraubt oder kostengünstig geclipst werden.

Gemäß einer weiteren bevorzugten Ausführungsform der Erfindung ist der Steckverbinder des Türkabelbaums benachbart zu einer Zugangsöffnung in der Türinnenverkleidung angeordnet.

Dadurch, dass der Steckverbinder des Türkabelbaums in einem Bereich der Fahrzeugtür angeordnet ist, der bei komplett montierter Tür über eine Zugangsöffnung zu erreichen ist, können Nachrüstungen oder Servicearbeiten an der Steckverbindung besonders kostengünstig und zeitsparend durchgeführt werden. Insbesondere ist es auch möglich, bei komplett zusammengebauter Tür über ein an den Steckverbinder angeschlossenes Diagnosegerät eine dezentrale Diagnose der elektrischen Türkomponenten durchzuführen. Die Zugangsöffnung kann beispielsweise eine leicht zugängliche Aufnahme für einen Türaschenbecher oder eine Türtasche sein.

Nach einer weiteren bevorzugten Ausführungsform der Erfindung ist mindestens ein Steckermodul mit einem Elektronikbauteil bestückbar.

Dadurch, dass die Steckermodule mit elektronischen Bauteilen, beispielsweise Drosselspulen, Widerstände, Kapazitäten, Transistoren, bestückt werden können, ergibt sich die Möglichkeit bestimmte elektronische Funktionen direkt in der Steckverbindung zu platzieren. Dadurch können Kosten und Bauraum für separate elektronische Bauelemente eingespart und die Türverkabelung vereinfacht werden. Durch die Bestückung der Steckermodule mit elektrischen Sicherungen ist beispielweise eine einfache dezentrale elektrische Absicherung der Tür möglich.

Gemäß einer weiteren bevorzugten Ausführungsform ist der Steckverbinder des Hauptkabelbaums über die Steckermodule mit einem dem Türkabelbaum vorgeschalteten Steuergerät verbindbar.

Häufig vorhandene Türsteuergeräte können ebenfalls mit dem modular aufgebauten Steckverbinder verbunden werden. Dadurch wird die Verwendungsvielfalt des Steckverbinders noch weiter erhöht. Das Türsteuergerät kann an der Trennstelle auf der Schallisolierung gehaltert sein.

Nach einer weiteren bevorzugten Ausführungsform der Erfindung weisen die einander zugeordneten Steckermodule von Hauptkabelbaum und Türkabelbaum jeweils eine entsprechende Kennzeichnung auf. Die Kennzeichnung kann auch als eine elektronische Codierung ausgebildet sein.

Durch die Kennzeichnung der Steckermodule wird die Montage vereinfacht und die Gefahr von Montagefehlern verringert. Durch eine elektronische Codierung wird eine entsprechende elektronische Überwachung und Prüfung ermöglicht.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

Es zeigen
- Figur 1:: Eine Fahrzeugtür mit einer modularen Steckverbindung in einer perspektivischen schematischen Ansicht und
- Figur 2:: eine vergrößerte Detailansicht der Steckverbindung in drei Montageschritten:

a) bei getrennten Steckermodulen,
b) bei verbundenen Steckermodulen und
c) bei komplett montierter Steckverbindung.

Eine Steckverbindung für elektrische Leitungen in einem Fahrzeug besteht im Wesentlichen aus einem modular aufgebauten Steckverbinder 7 eines Hauptkabelbaums 3, der in einem Trockenbereich 24 einer Fahrzeugtür 1 mit einem ebenfalls modular aufgebauten, vormontierten und fixierten Steckverbinder 7' eines Türkabelbaums 4 verbindbar ist.

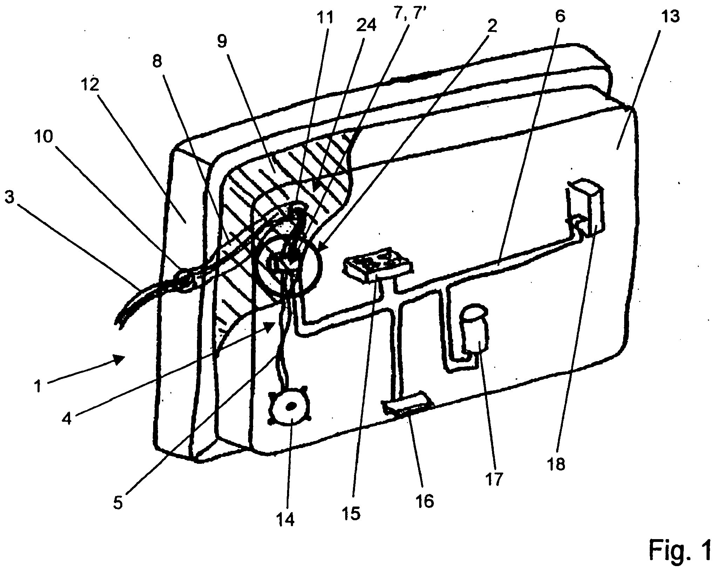

Der Hauptkabelbaum 3 wird durch eine Öffnung 10 in einem Türinnenblech 12 zu einer Trennstelle 2 geführt. Die Trennstelle 2 ist in Fig.1 durch einen Kreis markiert. Für die Führung des Hauptkabelbaums 3 ist eine Verlegehilfe 8, vorteilhaft als ein flexibles Kunststoffrohr ausgebildet, vorgesehen, die zwischen der Öffnung 10 und einem Durchbruch 11 in einem Türbauteil 9, vorteilhaft eine Schallisolierung, verlegt ist. Die Trennstelle 2 befindet sich auf der Trockenseite der Schallisolierung 9. Der Steckverbinder 7' des Türkabelbaums 4 ist dort, benachbart zu dem Durchbruch 11, auf der Schallisolierung befestigt, so dass der Steckverbinder 7 des Hauptkabelbaums 3 leicht auf den Steckverbinder 7' aufsteckbar ist. Zur Fahrzeuginnenseite hin ist die Schallisolierung 9 und die darauf montierte Steckverbindung mit den Kabelbäumen 3, 4 durch eine Türinnenverkleidung 13 abgedeckt. Die Trennstelle 2 ist vorzugsweise über eine nicht dargestellte Öffnung in der Türinnenverkleidung 13, beispielsweise eine einfach herausnehmbare Türtasche, für Diagnose, Service-oder Nachrüstarbeiten leicht zugänglich Von dem Türkabelbaum 4 führen verschiedene Zweige zu den einzelnen elektrischen Komponenten in der Fahrzeugtür 1. In Fig. 1 ist exemplarisch ein Rundleiter 5 dargestellt, der zu einem Lautsprecher 14 führt, und ein Flachleiter 6, der über weitere Verzweigungen zu einer Schaltkonsole 15 zur Bedienung verschiedener Funktionen (beispielsweise Türverriegelung, Fensterheber, u.a.), zu einer Einstiegsbeleuchtung 16, zu einem Fensterhebermotor17 sowie zu einem elektrischen Türschloss 18 führt.

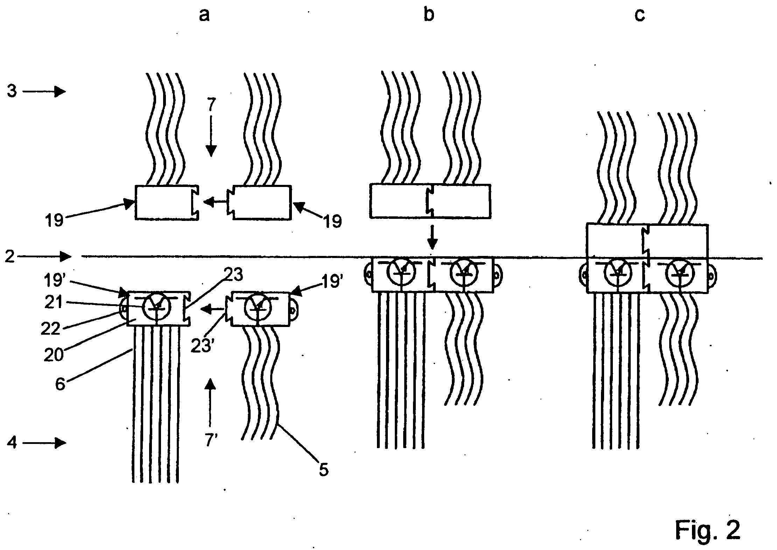

Die Steckverbindung wird durch das Verbinden der Steckverbinder 7 des Hauptkabelbaums 3 und 7' des Türkabelbaums 4 gebildet. Die Steckverbinder 7 und 7' werden wiederum durch das Verbinden einzelner Steckermodule 19, 19' gebildet. In Fig. 2 sind drei Montagezustände der Steckverbindung dargestellt, wobei in der oberen Bildhälfte die Hauptkabelbaumseite 3 und in der unteren Bildhälfte die Türkabelbaumseite 4 sowie die dazwischen liegende Trennstelle 2 angedeutet ist. Fig. 2a zeigt die noch getrennten Steckermodule 19, 19'. Auf der Hauptkabelbaumseite 3 sind beispielhaft zwei Steckermodule 19, die jeweils an einen Rundleiter, bzw. ein Rundleiterbündel 5 angeschlossen sind, dargestellt. Ein erstes als Gegenstück zu den Modulen 19 ausgebildetes Steckermodul 19' auf der Türkabelbaumseite 4 ist an einen Flachleiter, bzw. an ein Flachleiterband 6, angeschlossen, ein zweites Steckermodul 19' ist an ein Rundleiterbündel 5 angeschlossen. Die benachbarten Module 19, und die benachbarten Module 19' weisen jeweils ein kodierbares Verbindungsmittel 23, bzw. 23' auf. Das Verbindungsmittel 23 ist in Fig. 2 jeweils auf der rechten Längsseite des quaderförmigen Modulkörpers 20 der im Bild links angeordneten Steckermodule 19 und 19' als eine Ausnehmung mit einem übergreifenden Rand ausgebildet. Dazu benachbart ist auf der linken Längsseite der im Bild rechts angeordneten Steckermodule 19, 19' jeweils ein als Gegenstück zu der Ausnehmung 23 ausgebildeter pontonartiger Vorsprung 23' ausgebildet. Durch die Verbindungsmittel 23 und 23' ist eine formschlüssige Verriegelung durch ein Ineinanderschieben der Steckermodule 19 untereinander, bzw. der Steckermodule 19' untereinander bildbar. Auf diese Weise können beliebig viele Steckermodule zu dem Steckverbinder 7, bzw. 7' zusammengefügt werden. An der linken Längsseite des ersten Steckermoduls 19', und an der rechten Längsseite des zweiten Steckermoduls 19' ist jeweils eine Befestigungshilfe 22, vorteilhaft als ein Ansatzstück 22 mit einer Bohrung ausgebildet, angeordnet, über die der zusammengesetzte Steckverbinder 7' auf der Schallisolierung 9 befestigbar, beispielsweise mit Schrauben verschraubbar, ist. Weiterhin sind die Steckermodule 19' mit Elektronikbauteilen 21, stellvertretend durch ein Transistorsymbol dargestellt, bestückt. Selbstverständlich können auch die Steckermodule 19 mit Elektronikbauteilen bestückt sein.

Vorteilhafterweise wird der Steckverbinder 7' des Türkabelbaums 4 bereits in der Vormontage beim Konfektionär zusammengefügt und fest montiert, während der Steckverbinder 7 des Hauptkabelbaums 3 erst direkt vor dem Steckvorgang an der Fahrzeugtür 1 zusammengefügt wird. Fig. 2b zeigt den Montagezustand der zusammengefügten Steckverbinder 7 und 7' direkt vor dem Steckvorgang. Fig. 2c zeigt schließlich die fertig zusammengefügte und elektrisch kontaktierte Steckverbindung nach dem Steckvorgang.

### Bezugszeichenliste

- 1: Fahrzeugtür
- 2: Trennstelle
- 3: Hauptkabelbaum
- 4: Türkabelbaum
- 5: Rundleiter
- 6: Flachleiter
- 7, 7': Steckverbinder
- 8: Verlegehilfe
- 9: Türbauteil (Trennstelle Nass-/Trockenraum)
- 10: Öffnung
- 11: Durchbruch
- 12: Türinnenblech
- 13: Türinnenverkleidung
- 14: Lautsprecher
- 15: Schaltkonsole
- 16: Einstiegsbeleuchtung
- 17: Fensterheber
- 18: Elektrisches Türschloss
- 19, 19': Steckermodul
- 20: Modulkörper
- 21: Elektronikbauteil
- 22: Befestigungshilfe
- 23, 23': Verbindungsmittel
- 24: Trockenbereich

## Patentansprüche

1. Steckverbindung für elektrische Leitungen in einem Fahrzeug, bei der ein fahrzeugseitiger Hauptkabelbaum und ein fahrzeugtürseitiger Türkabelbaum über als Gegenstücke ausgebildete Steckverbinder an einer Trennstelle miteinander elektrisch verbindbar sind, und bei der die Trennstelle zwischen dem Hauptkabelbaum und dem Türkabelbaum in einem Trockenbereich der Fahrzeugtür angeordnet ist, wobei mindestens der Steckverbinder (7) des Hauptkabelbaums (3) in einer modularen Bauweise aus lösbar zusammenfügbaren Steckermodulen (19) ausgebildet ist, und dass über die Steckermodule (19) vorgegebene elektrische Rund- und/oder Flachleiter (5, 6) der Kabelbäume (3, 4) an der Trennstelle (2) miteinander kontaktierbar sind; **dadurch gekennzeichnet, dass** der zur Fahrzeugtür (1) hin zeigende Abgang des Hauptkabelbaums (3) über eine an der Fahrzeugtür (1) angeordnete Verlegehilfe (8) zu der Trennstelle (2) in den Trockenbereich der Fahrzeugtür (1) führbar ist.

2. Steckverbindung nach Anspruch 1, **dadurch gekennzeichnet, dass** der Steckverbinder (7') des Türkabelbaums (4) in der modularen Bauweise aus Steckermodulen (19') ausgebildet ist.

3. Steckverbindung nach Anspruch 1 oder 2, **dadurch gekennzeichnet, dass** die Steckermodule (19, 19') über an den Steckermodulkörpern (20) angeordnete, formschlüssig ineinandergreifende Verbindungsmittel (23, 23') zusammenfügbar sind.

4. Steckverbindung nach einem der Ansprüche 1 bis 3, **dadurch gekennzeichnet, dass** der Steckverbinder (7') des Türkabelbaums (4) auf der Trockenseite eines den Trockenbereich (24) der Fahrzeugtür (1) begrenzenden Türbauteils (9) fixiert ist.

5. Steckverbindung nach einem der Ansprüche 1 bis 4, **dadurch gekennzeichnet, dass** an mindestens einem Steckermodul (19') des Türkabelbaums (4) eine Befestigungshilfe (22) zur Fixierung des Steckverbinders (7') des Türkabelbaums (4) angeordnet ist.

6. Steckverbindung nach Anspruch 1, **dadurch gekennzeichnet, dass** die Verlegehilfe (8) als ein flexibles Kunststoffrohr ausgebildet ist.

7. Steckverbindung nach Anspruch 1 oder 6, **dadurch gekennzeichnet, dass** die Verlegehilfe (8) zwischen einer Öffnung (10) in einem stirnseitigen Bereich eines Türinnenbleches (12) oder im Bereich einer Türinnenverkleidung (13) und einem Durchbruch (11) des den Trockenbereich (24) der Fahrzeugtür (1) begrenzenden Türbauteils (9) angeordnet ist.

8. Steckverbindung nach Anspruch 7, **dadurch gekennzeichnet, dass** der Steckverbinder (7') des Türkabelbaums (4) auf der Trockenseite des den Trockenbereich (24) der Fahrzeugtür (1) begrenzenden Türbauteils (9) benachbart zu dem Durchbruch (11) fixiert ist.

9. Steckverbindung nach Anspruch 7 oder 8, **dadurch gekennzeichnet, dass** das den Trockenbereich (24) der Fahrzeugtür (1) begrenzende Türbauteil (9) als ein formstabiles Bauteil ausgebildet ist.

10. Steckverbindung nach einem der Ansprüche 1 bis 9, **dadurch gekennzeichnet, dass** der Steckverbinder (7') des Türkabelbaums (4) benachbart zu einer Zugangsöffnung in der Türinnenverkleidung (13) angeordnet ist.

11. Steckverbindung nach einem der Ansprüche 1 bis 10, **dadurch gekennzeichnet, dass** mindestens ein Steckermodul (19, 19') mit einem Elektronikbauteil (21) bestückbar ist.

12. Steckverbindung nach einem der Ansprüche 1 bis 11, **dadurch gekennzeichnet, dass** der Steckverbinder (7) des Hauptkabelbaums (3) über die Steckermodule (19) mit einem dem Türkabelbaum (4) vorgeschalteten Steuergerät verbindbar ist.

13. Steckverbindung nach einem der Ansprüche 1 bis 12, **dadurch gekennzeichnet, dass** die einander zugeordneten Steckermodule (19, 19') von Hauptkabelbaum (3) und Türkabelbaum (4) jeweils eine entsprechende Kennzeichnung aufweisen.

14. Steckverbindung nach Anspruch 13, **dadurch gekennzeichnet, dass** die Kennzeichnung als eine elektronische Codierung ausgebildet ist.

## Claims

1. A plug-in connection for electrical lines in a vehicle, in which a vehicle-side main wiring harness and a vehicle door-side door wiring harness can be interconnected electrically at a separation point by plug-in connectors which are configured as counter pieces, and in which the separation point between the main wiring harness and the door wiring harness is arranged in a dry region of the vehicle door, wherein at least the plug-in connector (7) of the main wiring harness (3) is formed from plug modules (19) which can be joined together in a detachable manner in a modular construction, and that electrical circular conductors and/or flat conductors (5, 6), provided by the plug modules (19), of the wiring harnesses (3, 4) can be contacted together at the separation point (2), **characterised in that** the outgoing line, directed towards the vehicle door (1), of the main wiring harness (3) can be guided to the separation point (2) in the dry region of the vehicle door (1) via an installation aid (8) arranged on the vehicle door (1).

2. A plug-in connection according to claim 1, **characterised in that** the plug-in connector (7') of the door wiring harness (4) is formed from plug modules (19') in a modular construction.

3. A plug-in connection according to claim 1 or claim 2, **characterised in that** the plug modules (19, 19') can be joined together by connection means (23, 23') which engage positively in one another and are arranged on the bodies (20) of the plug modules.

4. A plug-in connection according to any one of claims 1 to 3, **characterised in that** the plug-in connector (7') of the door wiring harness (4) is fixed on the dry side of a door component (9) which delimits the dry region (24) of the vehicle door (1).

5. A plug-in connection according to any one of claims 1 to 4, **characterised in that** a fastening aid (22) for fixing the plug-in connector (7') of the door wiring harness (4) is arranged on at least one plug module (19') of the door wiring harness (4).

6. A plug-in connection according to claim 1, **characterised in that** the installation aid (8) is configured as a flexible plastics pipe.

7. A plug-in connection according to claim 1 or claim 6, **characterised in that** the installation aid (8) is arranged between an opening (10) in an end face region of an inner door panel (12) or in the region of a door interior trim (13) and an opening (11) in the door component (9) which delimits the dry region (24) of the vehicle door (1).

8. A plug-in connection according to claim 7, **characterised in that** the plug-in connector (7') of the door wiring harness (4) is fixed next to the opening (11) on the dry side of the door component (9) which delimits the dry region (24) of the vehicle door (1).

9. A plug-in connection according to claim 7 or claim 8, **characterised in that** the door component (9) which delimits the dry region (24) of the vehicle door (1) is configured as a dimensionally stable component.

10. A plug-in connection according to any one of claims 1 to 9, **characterised in that** the plug-in connector (7') of the door wiring harness (4) is arranged next to an access opening in the door interior trim (13).

11. A plug-in connection according to any one of claims 1 to 10, **characterised in that** at least one plug module (19, 19') can be fitted with an electronics component (21).

12. A plug-in connection according to any one of claims 1 to 11, **characterised in that** the plug-in connector (7) of the main wiring harness (3) can be connected to a control device which is connected upstream of the door wiring harness (4) by the plug modules (19).

13. A plug-in connection according to any one of claims 1 to 12, **characterised in that** the mutually associated plug modules (19, 19') of the main wiring harness (3) and the door wiring harness (4) have a respective corresponding identification.

14. A plug-in connection according to claim 13, **characterised in that** the identification is configured as an electronic coding.

## Revendications

1. Dispositif de connexion à fiches de conducteurs électriques dans un véhicule dans lequel un faisceau de câbles principal côté véhicule et un faisceau de câbles de porte côté porte du véhicule peuvent être connectés électriquement au niveau d'un point de séparation par l'intermédiaire de connecteurs à fiches réalisés sous la forme de pièces antagonistes, et le point de séparation entre le faisceau de câbles principal et le faisceau de câbles de porte est installé dans une zone sèche de la porte du véhicule, au moins le connecteur à fiches (7) du faisceau de câbles principal (3) étant réalisé selon une configuration modulaire à partir de modules de connexion (19) pouvant être assemblés, de manière amovible et, les modules de connexion (19) permettant la mise en contact au niveau du point de séparation (2) de conducteurs électriques ronds et/ou plats (5, 6) des faisceaux de câbles (3, 4),
**caractérisé en ce que**
l'extrémité du faisceau de câbles principal (3) dirigée vers la porte (1) du véhicule peut être conduite par l'intermédiaire d'un auxiliaire de pose (8) monté sur la porte du véhicule (1) vers le point de séparation (2) dans la zone sèche de la porte du véhicule (1).

2. Dispositif de connexion à fiches conforme à la revendication 1,
**caractérisé en ce que**
le connecteur à fiches (7') du faisceau de câbles de porte (4) est formé de modules de connexion (19) selon une configuration modulaire.

3. Dispositif de connexion à fiches conforme à la revendication 1 ou 2, **caractérisé en ce que**
les modules de connexion (19, 19') peuvent être assemblés par l'intermédiaire de moyens de liaison (23, 23') installés sur les corps de modules de connexion (20) et venant en prise par une liaison par la forme.

4. Dispositif de connexion à fiches conforme à l'une des revendications 1 à 3,
**caractérisé en ce que**
le connecteur à fiches (7') du faisceau de câbles de porte (4) est fixé sur le côté sec d'un élément de porte (9) limitant la zone sèche (24) de la porte (1) du véhicule.

5. Dispositif de connexion à fiches conforme à l'une des revendications 1 à 4,
**caractérisé en ce que**
sur au moins un module de connexion (19') du faisceau de câbles de porte (4) est installé un auxiliaire de fixation (22) pour permettre de fixer le connecteur à fiches (7') du faisceau de câbles de porte (4).

6. Dispositif de connexion à fiches conforme à la revendication 1, **caractérisé en ce que**
l'auxiliaire de pose (8) est réalisé sous la forme d'un tube en matériau synthétique flexible.

7. Dispositif de connexion à fiches conforme à la revendication 1 ou 6, **caractérisé en ce que**
l'auxiliaire de pose (8) est installé entre une ouverture (10) située dans la zone frontale d'une tôle interne de porte (12) ou dans la zone d'un habillage interne de porte (13) et un perçage (11) de l'élément de porte (9) limitant la zone sèche (24) de la porte du véhicule (1).

8. Dispositif de connexion à fiches conforme à la revendication 7, **caractérisé en ce que**
le connecteur à fiches (7') du faisceau de câbles de porte (4) est fixé sur le côté sec de l'élément de porte (9) limitant la zone sèche (24) de la porte du véhicule (1), au voisinage du perçage (11).

9. Dispositif de connexion à fiches conforme à la revendication 7 ou 8, **caractérisé en ce que**
l'élément de porte (9) limitant la zone sèche (24) de la porte du véhicule (1) est réalisé sous la forme d'un élément présentant une stabilité de forme.

10. Dispositif de connexion à fiches conforme à l'une des revendications 1 à 9,
**caractérisé en ce que**
le connecteur à fiches (7') du faisceau de câbles de porte (4) est installé à proximité d'une ouverture d'accès situé dans l'habillage interne (13) de la porte.

11. Dispositif de connexion à fiches conforme à l'une des revendications 1 à 10,
**caractérisé en ce qu'**
au moins un module de connexion (19, 19') peut être équipé d'un composant électronique (21).

12. Dispositif de connexion à fiches conforme à l'une des revendications 1 à 11,
**caractérisé en ce que**
le connecteur à fiches (7) du faisceau de câbles principal (3) peut être relié par l'intermédiaire du module de connexion (19) à un appareil de commande monté en avant du faisceau de câbles de porte (4).

13. Dispositif de connexion à fiches conforme à l'une des revendications 1 à 12,
**caractérisé en ce que**
les modules de connexion associés (19, 19') du faisceau de câbles principal (3) et du faisceau de câbles de porte (4) comportent chacun un élément d'identification correspondant.

14. Dispositif de connexion à fiches conforme à la revendication 13, **caractérisé en ce que**
l'élément d'identification est réalisé sous la forme d'un codage électronique.
